# EUROPEAN PATENT APPLICATION

(11) **EP 4 645 357 A1**
(43) Date of publication of application: **05.11.2025**
(21) Application number: 24173185.0
(22) Date of filing: 29.04.2024
(51) Int. Cl.: H01G 11/04, H01G 11/06, H01G 11/24, H01G 11/26, H01G 11/48, H01G 11/62, H01M 4/86, H01M 4/96, H01G 11/30, H01G 11/58, H01M 10/36

(54) **ELECTRICAL CELL**

(71) Applicant: Technische Universität Hamburg (TUHH), 21073 Hamburg (DE); Universität Hamburg KöR, 20148 Hamburg (DE); Universitat Politècnica de Catalunya BarcelonaTech (UPC), 08034 Barcelona (ES); Deutsches Elektronen-Synchrotron DESY, 22607 Hamburg (DE); Institució Catalana de Recerca i Estudis Avançats, 08010 Barcelona (ES)
(72) Inventor: Brinker, Manuel, 22765 Hamburg (DE); Liseanskaia, Mariia, 22607 Hamburg (DE); Huber, Patrick, 22605 Hamburg (DE); Patrick, Funnemann, 22850 Norderstedt (DE); Fröba, Michael, 21073 Hamburg (DE); Yaroshchuk, Andriy, 08960 Sant Just Desvern, (ES)
(74) Representative: RCD-Patent Giesen, Schmelcher & Griebel Patentanwälte PartG mbB

(57) **Abstract**

The invention relates to an electrical cell (1) comprising
• a reservoir (R) containing an electrolyte (EL),
• a first electrode (E1), the first electrode (E1) being in electrical contact with the electrolyte (EL),
• a second electrode (E2),
• the second electrode (E2) being conductive and having a porous nano structure, comprising pores having a diameter of less than 1000 nm,
• whereby the first electrode (E1) in comparison to the second electrode (E2) offers a different electrical potential of zero charge,
• whereby the second electrode (E2) in operation is contacting the electrolyte (EL), such that the second electrode (E2) is wetted by the electrolyte (EL) due to capillary forces, whereby the electrolyte (EL) within the pores by means of the formation of electrical double layers provides an electrical current.

## Description

The invention relates to an electrical cell.

### Background

Electrical cells are gaining a lot of attention due to the ever-growing need for electrical power.

Several types of electrical cells are known.

For example, from US Patent Application US 2009 / 0 243 428 A1 a system is known based on a nanoporous material in which mechanical motion and / or heat is converted into electrical energy by acting as a filter allowing only one type of ions to traverse the nanoporous material.

US Patent US 10,305,396 B1 describes an electrochemical device for generating a time dependent electrical signal based on an external stimulus.

US Patent Application 2020 / 0 381 738 A1 describes an electrical energy generating element having a specific arrangement. The porosity of a membrane therein is such that only certain ions may pass whereas other ions having a different charge are not able to pass.

Furthermore, International Patent Application WO 2020 / 263 800 A1 discloses a system and method for energy generation from salinity gradients using asymmetrically porous electrodes. By cyclically immersing the electrodes in freshwater and saltwater, energy is harvested from Gibbs free energy from mixing saltwater and freshwater.

Also, several directions for using kinetic energy by hydrovoltaic effects are described in the article "Hydrovoltaic Energy on the way" by Yin et al., published in Joule, Volume 4, Issue 9, 16 September 2020, Pages 1852-1855, https://doi.org/10.1016/j.joule.2020.07.015.

In the Article "Self-powered PtNi-polyaniline films for converting rain energy into electricity" by Wang et al., published in RSC Adv. 2023 Aug 21;13(35):24805-24811. doi: 10.1039/d3ra03526c. PMID: 37608972; PMCID: PMC10440591 the use of chemical energy of rain by means of a graphenoxid film is described.

### Problem

While all of the above have provided solutions to specific problems, none of these provide a solution which could be easily implemented and/or provide the possibility to provide electrical power without hazardous materials.

### Summary of the invention

It is therefore an object of the invention to provide a new approach. The object of the invention is solved by the intendent claim, in particular by an electrical cell comprising a reservoir containing an electrolyte and a first electrode, the first electrode being in electrical contact with the electrolyte, a second electrode, the second electrode being conductive and having a porous nano structure, comprising pores having a diameter of less than 1000 nm, whereby the first electrode in comparison to the second electrode offers a different electrical potential of zero charge, whereby the second electrode in operation is contacting the electrolyte, such that the electrolyte due to capillary forces is wetted, whereby the electrolyte within the pores by means of formation of electrical double layers provides an electrical current.

Further advantageous embodiments are subject to the dependent claims, the description and the figures.

### Brief description of the drawings

In the following reference will be made towards the figures. In these
- Figs. 1a-1c: show schematically an electrical cell 1 according to exemplary embodiments,
- Figs. 2-4: show the current and potential over time for measurements for Zero Resistance Amperometry of an exemplary embodiment,
- Fig. 5: shows the current and potential over time for a measurement of Open Circuit Potential of an exemplary embodiment,
- Figs. 6 and 7: show the current and mass of the liquid soaked up into the second electrode over time for measurements of an exemplary embodiment in a measurement arrangement as described in context of Figs. 2-4,
- Fig. 8: shows results of several consecutive measurements of current relaxation during imbibition.
- Figs. 9 and 10: show the current and mass of the liquid soaked up into different sized second electrodes over time.

### Detailed description

The present disclosure describes preferred embodiments with reference to the Figures, in which like reference signs represent the same or similar elements. Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

The described features, structures, or characteristics of the invention may be combined in any suitable manner in one or more embodiments. In the description, numerous specific details are recited to provide a thorough understanding of embodiments of the invention. I.e., unless indicated as alternative only any feature of an embodiment may also be utilized in another embodiment.

In addition, even though at some occurrences certain features will be described with reference to a single entity, such a description is for illustrative purpose only and actual implantations of the invention may also comprise one or more of these entities. I.e. usage of singular also encompasses plural entities unless indicated.

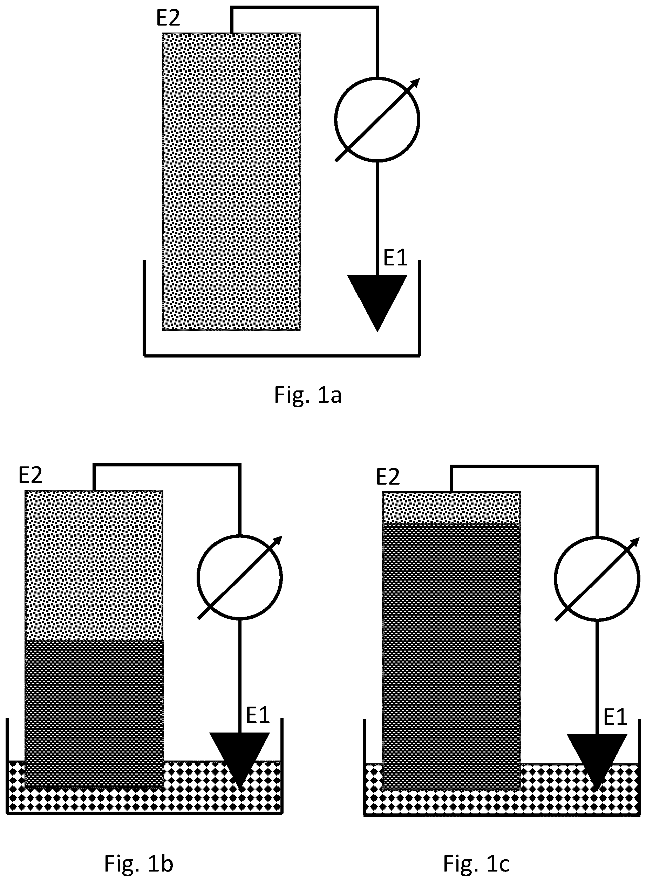

An exemplary embodiment will now be described with reference to the figure. In particular in Figs. 1a-1c an electrical cell 1 according to exemplary embodiments is shown schematically. The electrical cell comprises a reservoir R.

The reservoir may be provided with or without electrolyte EL as shown in Fig. 1a. For example, the electrolyte EL may be filed into the reservoir R, when needed.

The electrical cell also comprises a first electrode E1, whereby the first electrode E1 is in operation in electrical contact with the electrolyte EL. Note, even though the reservoir R and the first electrode are depicted as separate entities, this may also be embodied by a conductive reservoir R acting as first electrode E1.

Furthermore, the electrical cell comprises a second electrode E2, whereby the second electrode E2 is conductive and having a porous nano structure, comprising pores having a diameter of less than 1000 nm. To allow easy wetting with an (aqueous) electrolyte, the second electrode E2 offers preferably also hydrophilic properties.

The first electrode E1 in comparison to the second electrode E2 offers a different electrical potential of zero charge.

When the second electrode E2 in operation is contacting the electrolyte EL the second electrode E2 is wetted by the electrolyte EL due to capillary forces. This process is continuing as shown in Figs. 1b and 1c showing an exemplary imbibing of the second electrode E2 over time, i.e. Fig. 1c reflects a timepoint after Fig. 1b.

Due to the electrolyte (EL) filling pores, by means of the formation of electrical double layers a potential develops which allows for providing an electrical current.

When nanoporous media get in contact with liquid, depending on the wetting condition, a concave meniscus could appear and the capillary effect will happen due to the Laplace pressure. Under the influence of Laplace pressure, liquid gets absorbed into the nanopores spontaneously. This process is called imbibition. Imbibition follows the square root of time.

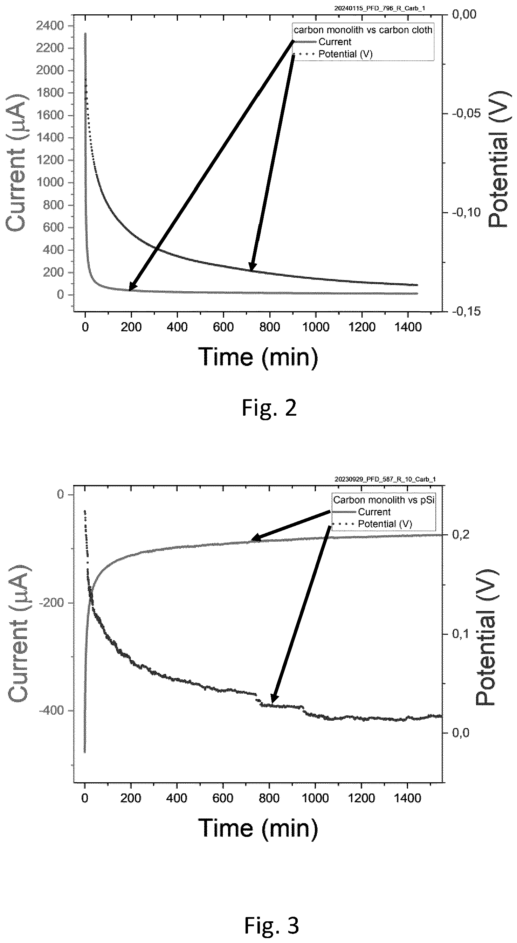

In Figs. 2-4 results are shown from tests performed for imbibition. There it is shown that there is a definite electrical response that occurs when the liquid penetrates into the pores.

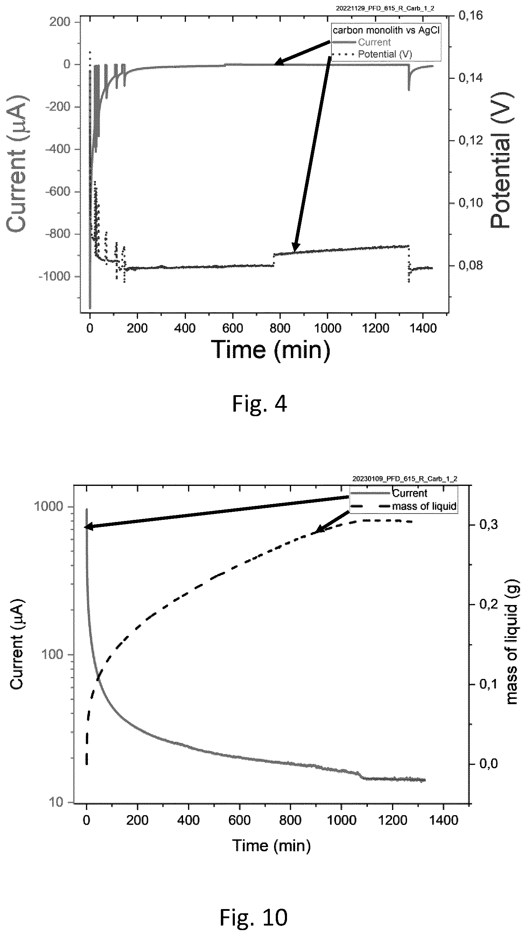

One may observe, that the current starts from a peak value and decreases, while for the potential different scenarios are possible depending on the material of the reference electrode. Both current and potential undergo changes with time. The change in current is thereby more significant than the change in potential. In some cases - see Fig. 4 - there is an increase in the absolute value of the potential when the surface is wetted. It is worth noting that the macroscopic nature of the scheme implies a rather large resistance of the electrolyte. For a system with a smaller distance between the electrodes, the current increases.

Note, the measurement scheme by means of which the results of Figs.2-4 were obtained and a schematic representation of the fluid dynamics occurring for the working electrode are based on an additional reference electrode in the electrolyte used for measuring the potential between the reference electrode (not shown in Figs. 1a-c) and the second electrode E2 whereas the current was measured separately with respect to the first electrode E1. The measurement is also known as ZRA - Zero Resistance Amperometry. The measurements were made with an electrolyte of 0.1 M NaCl Solution and rH of ~ 50% and a Temperature of T = 20° C. It is noted, that such conditions are not necessary or ideal and are presented for descriptive purposes only.

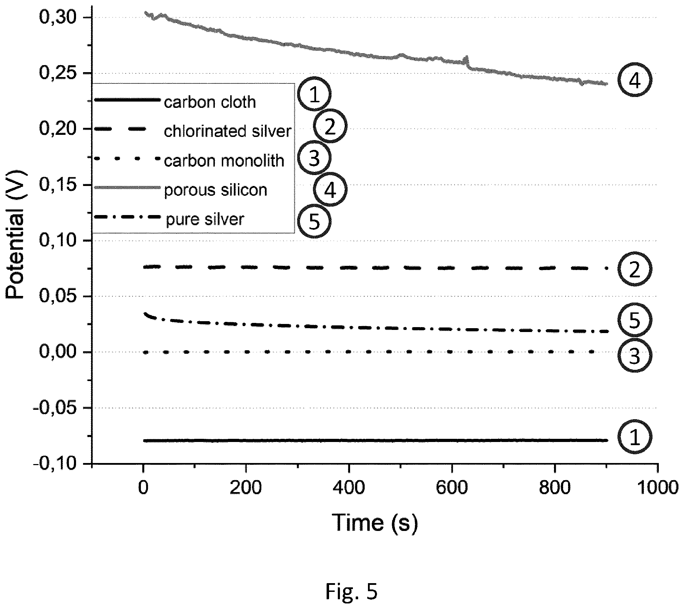

In Figure 5 results of Open Circuit Potential (OCP) experiments are shown to study the effect of material on the potential difference. Both electrodes were wetted with electrolyte beforehand and were completely immersed in the liquid during the experiment. In this way, the influence of liquid dynamics on the results was excluded at the initial stage. The working electrode was always a carbon mesoporous monolith and the reference electrode materials varied. The measurements were made with an electrolyte of 0.1 M NaCl Solution and a temperature of T = 20° C. It can be seen that the carbon monolith has a potential difference very close to zero. However, in comparison with the carbon cloth the difference increases and becomes comparable to silver chloride (AgCl), but with the opposite sign. In this exemplary measurement series, the largest potential difference is given by the monolith vs. porous silicone, but the speed with which it decreases can be seen even with a relatively short measurement. It can be concluded that the potential difference does not determine the position of the material in the periodic table, otherwise the values for carbon monolith and fabric would be the same, but rather the surface chemistry of the materials. Additional tests with variation of the electrode surface areas for the same material showed a negligible influence on the potential. A potential difference other than zero between the electrodes, and thus a difference in their materials and in potential of zero charge, is essential for the functioning of the technology and the generation of an electrical current. It is implied that the counter electrode is also a conductive material. It may be wetted prior to inclusion in the circuit and an EDL may also form on it.

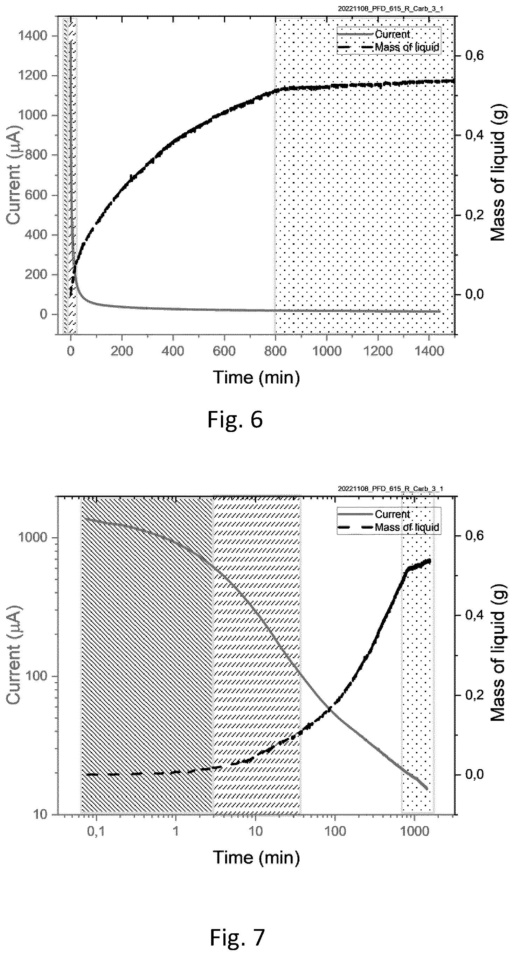

Figs. 6 and 7 show the current and mass uptake during imbibition but with different scales. While Fig. 6 depicts a linear scale Fig. 7 depicts a logarithmic scale. The shaded area indicates the time for which the current decreases by a factor of two, the dashed area - by a factor of 100. The dotted area indicates the electrolyte EL reaching the top of the second electrode E2, i.e. wetting is complete. The current relaxation is much faster compared to imbibition. Most of the charge is redistributed even before 30% of the exemplary 2cm sample volume of the second electrode E2 is filled.

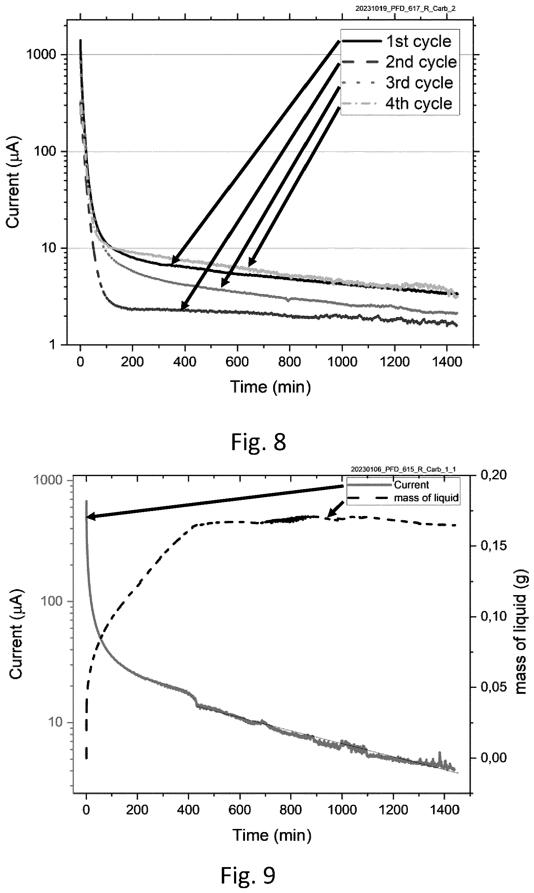

Fig. 8 shows results of several consecutive measurements of current relaxation during imbibition. The measurements were made with an electrolyte of 0.1 M NaCl Solution and a Temperature of T = 20° C. Between experiments, the second electrode E2 was disconnected from the circuit and left to dry under ambient conditions without any cleaning or additional manipulation. After 24 hours, the sample was reconnected to the circuit and a new measurement was made.

Figs.9 and 10 show the current and mass of the liquid soaked up into different sized second electrodes over time. The second electrode E2 used comprises both pores having a diameter in the range of 7-8 nm. The measurement in Fig. 9 was performed with an electrode having a diameter of 7 mm and a height of 1 cm whereas Fig. 10 was performed with an electrode having a diameter of 7 mm and a height of 1.5 cm. The Figures show the generated current during the wetting on a nanoporous carbon electrode immersed in a 0.1 mole/litre solution of aqueous sodium chloride (NaCl). Also, the change in mass of the nanoporous electrode during the imbibition of electrolyte solution inside the pores is shown.

In summary the invention pursues a novel idea of using electrolyte solutions in confinement of a conductive porous, in particular nanoporous, medium to generate electrical energy via the buildup of the electrical double layer (EDL) between the conductive surface within the nanoporous electrode and the electrolyte solution's ions.

An EDL develops when a conductive material, i.e. an electrode is in contact with an electrolyte solution, i.e. ions within a solvent. Ions from the electrolyte are attracted to the electrodes surface and assemble in distinct layers. On the electrode side this accumulation of ions is counter balanced by a layer of electron charge carriers. In particular, this holds also true during hydro-dynamic processes of the electrolyte solution within the porous medium. These processes encompass in particular an imbibition of electrolyte solution into a dry, unfilled porous medium. These processes are accompanied by the establishment of the EDL. Thus, charge carriers are moving to form an EDL on a newly wetted surface and an electrical current can be generated. The current flows between the nanoporous electrode and a counter electrode inserted into the electrolyte solution, which also contains the nanoporous electrode. An as large as possible difference in the potential of zero charge with respect to the counter electrode leads to a larger flow of ions and thus a larger current.

The second electrode comprises a nanoporous electrode material. Examples are nanoporous metals, such as gold, or nanoporous carbons. Therefore, the parameters of the porous electrode, i.e. pore diameter, porosity and macroscopic size of the electrode, may be finely tuned. The process does in principle not depend on the type of porous electrode. Moreover, it does not depend on the type of electrolyte solution and functions with an arbitrary concentration of the electrolyte species.

According to an embodiment of the invention the electrolyte EL comprises an acid. Acids may be found or provided very easily and the invention is also supporting the use of naturally available acids such as citric acid.

Preferably, the electrolyte EL is a biocompatible acid.

According to another embodiment, the electrolyte EL comprises sodium or potassium ions.

In a further embodiment of the invention the second electrode E2 is based on a carbon, e.g. a carbon fabric, graphenoxid, and / or a metal or a semiconductor and /or a conductive polymer.

In particular the second electrode E2 may be based on polyanilin and / or polypyrrol as examples of conductive polymers.

Also, the second electrode E2 may be based on copper and / or zinc and / or gold and / or Mangan and / or palladium as examples of a metal.

Likewise, the second electrode E2 may be based on Si.

According to an embodiment of the invention the second electrode E2 comprises a hydrophilic surface.

Still in another embodiment of the invention the contact surface of the second electrode E2 towards the electrolyte EL scales with the maximum current. In other words, the surface area may be indicative of a (maximum) current. It is noted that this may also be dependent on the wetted inner surface contributing to the formation of EDL.

According to yet another embodiment the volume of the second electrode E2 scales with the ability to provide a base current flow until the second electrode is soaked.

This application is part of a project that has received funding from the European Union's Horizon 2020 research and innovation programme under grant agreement No 964524 EHAWEDRY: "Energy harvesting via wetting-drying cycles with nanoporous electrodes" (H2020-FETOPEN-1-2021-2025).

## Claims

1. Electrical cell (1) comprising
• a reservoir (R) containing an electrolyte (EL),
• a first electrode (E1), the first electrode (E1) being in electrical contact with the electrolyte (EL),
• a second electrode (E2),
• the second electrode (E2) being conductive and having a porous nano structure, comprising pores having a diameter of less than 1000 nm,
• whereby the first electrode (E1) in comparison to the second electrode (E2) offers a different electrical potential of zero charge,
• whereby the second electrode (E2) in operation is contacting the electrolyte (EL), such that the second electrode (E2) is wetted by the electrolyte (EL) due to capillary forces, whereby the electrolyte (EL) within the pores by means of the formation of electrical double layers provides an electrical current.

2. Electrical cell (1) according to claim 1, whereby the electrolyte (EL) comprises an acid.

3. Electrical cell (1) according to claim 1 or 2, whereby the second electrode is (E2) based on a carbon and / or a metal or a semiconductor and /or a conductive polymer.

4. Electrical cell (1) according to claim 3, whereby the second electrode (E2) is based on polyanilin and / or polypyrrol.

5. Electrical cell (1) according to claim 3, whereby the second electrode (E2) is based on copper and / or zinc and / or gold and / or Mangan and / or palladium.

6. Electrical cell (1) according to claim 3, whereby the second electrode (E2) is based on Si.

7. Electrical cell (1) according to one of the preceding claims, whereby the second electrode (E2) comprises a hydrophilic surface.

8. Electrical cell (1) according to one of the preceding claims, **characterized in that** the electrolyte (EL) is a biocompatible acid.

9. Electrical cell (1) according to one of the preceding claims, **characterized in that** the contact surface of the second electrode (EL) towards the electrolyte (EL) scales with the maximum current.

10. Electrical cell (1) according to one of the preceding claims, **characterized in that** the volume of the second electrode (E2) scales with the ability to provide a base current flow until the second electrode is soaked.

11. Electrical cell (1) according to one of the preceding claims, **characterized in that** the electrolyte (EL) comprises sodium or potassium ions.
